# EUROPÄISCHE PATENTSCHRIFT

(11) **EP 0 802 948 B1**
(45) Veröffentlichungstag und Bekanntmachung des Hinweises auf die Patenterteilung: **02.02.2000**
(21) Anmeldenummer: 95941635.5
(22) Anmeldetag: 30.11.1995
(51) Int. Cl.: C08K 5/00

(54) **SCHLAGZÄH MODIFIZIERTE THERMOPLASTISCHE FORMMASSE MIT VERBESSERTER WÄRMEALTERUNGSBESTÄNDIGKEIT UND VERFAHREN ZU IHRER HERSTELLUNG**
THERMOPLASTIC MOULDING MATERIAL WHICH IS MODIFIED TO GIVE IT IMPACT-RESISTANCE AND IMPROVED HEAT-AGEING RESISTANCE, AND A PROCESS FOR MANUFACTURING SUCH A MATERIAL
MATIERE MOULABLE THERMOPLASTIQUE MODIFIEE POUR RESISTER AUX CHOCS ET PRESENTANT UNE RESISTANCE AMELIOREE AU VIEILLISSEMENT THERMIQUE, ET PROCEDE DE PRODUCTION DE LADITE MATIERE

(30) Priorität: 02.12.1994 DE 4442881
(43) Veröffentlichungstag der Anmeldung: 29.10.1997
(73) Patentinhaber: BASF AKTIENGESELLSCHAFT, 67056 Ludwigshafen (DE)
(72) Erfinder: GÜNTHERBERG, Norbert, D-67346 Speyer (DE); FISCHER, Wolfgang, D-67067 Ludwigshafen (DE); TICKTIN, Anton, D-68199 Mannheim (DE)
(86) Internationale Anmeldenummer: EP9504718
(87) Internationale Veröffentlichungsnummer: WO9617010

(56) Entgegenhaltungen:
- EP-A- 0 613 923
- EP-A- 0 625 542
- US-A- 4 489 099
- DATABASE WPI Section Ch, Week 7917 Derwent Publications Ltd., London, GB; Class A18, AN 79-32151B & JP,A,54 034 352 ( RIKEN VITAMIN OIL KK) , 13.März 1979

## Beschreibung

Die Erfindung betrifft die Stabilisierung von Polymerkunststoffen insbesondere vom ABS-Typ mit α-Tocopherol (Vitamin E) enthaltenden Mischungen.

α-Tocopherol ist ein als Vitamin E natürlich vorkommendes, in Form des Racemats auch technisch herstellbares Antioxidans, das in der Lebensmittelkonservierung verwendet wird, aber auch zur Stabilisierung von industriell hergestellten Polymeren eingesetzt werden kann (DE-A-1 114 319 und 1 136 102), besonders solchen, die bei der Lebensmittelverpackung eingesetzt werden sollen.

α-Tocopherol enthaltende Mischungen mehrerer Stabilisatoren sollen bei Polymerkunststoffen besonders günstig wirken.

So schlägt die EP-A-408 693 die Verwendung von Fettsäureglyceriden als Costabilisatoren vor. Nach EP-A-542 108 wird für Polyethylen enthaltende Materialien die Verwendung von Phosphor oder Schwefel enthaltenden Costabilisatoren empfohlen. Stabilisatorgemische, die α-Tocopherol enthalten, werden zur Stabilisierung von Kunststoffen auch in den japanischen Patentveröffentlichungen 009887, 100361 und 142537 beschrieben. Soweit man den vorgenannten Veröffentlichungen entnehmen kann, werden die Stabilisatoren bzw. deren Gemische den plastischen Massen in der üblichen Weise, d.h. bei der Verarbeitung in fester Form zugesetzt.

Es hat sich jedoch gezeigt, daß die beschriebenen Mischungen z.T. praktisch gar nicht auf diese Weise erhalten werden können, weil es schon bei der Einmischung zu erheblichen Zersetzungserscheinungen kommt; auch haben die fertigen Mischungen häufig schlecht reproduzierbare Eigenschaften, was daran liegen mag, daß die benötigten Stabilisatormengen gering sind und daher eine ungleichmäßige Verteilung wahrscheinlich ist. Gleichmäßige Verteilung ließe sich vermutlich nur durch eine Vormischung (sog. Masterbatch) erreichen, was zur mindestens doppelten Wärmebelastung gegenüber der Direkteinmischung führen müßte.

Zum anderen wäre es wünschenswert, nicht nur verarbeitungsfertige Kunststoffe, sondern schon deren Vorprodukte bzw. Zusatzstoffe zu stabilisieren. Besonders gilt dies für Pfropfkautschuk auf der Grundlage von Polybutadien, der bekanntlich wegen seiner olefinisch vielfach ungesättigten Struktur gegen Oxidation empfindlich ist.

Aufgabe der Erfindung ist daher die Herstellung eines mit einer Mischung von α-Tocopherol und schwefelhaltigen Stabilisatoren aus der Gruppe der Thiodipropionsäureester gegen Oxidation stabilisierten, Polybutadien enthaltenden Pfropfkautschuks, der die Stabilisatoren in möglichst wirksamer Form und in gleichmäßig feiner Verteilung enthält.

Es wurde gefunden, daß Mischungen von α-Tocopherol und schwefelhaltigen Stabilisatoren aus der Gruppe der Thiodipropionsäureester mit speziellen, Polybutadien enthaltenden Pfropfkautschuken, nämlich Polybutadien-g-SAN-Pfropfkautschuklatices mit bimodaler Teilchengrößenverteilung vorteilhaft dadurch erhalten werden, daß man die Bestandteile in Form einer Emulsion oder Dispersion miteinander mischt und die Mischung nach Bedarf durch Ausfällen und Trockenen entwässert. Diese Mischungen können - entweder als Latex oder in entwässerter Form - in an sich bekannter Weise in eine Polymerschmelze eines harten Polymerwerkstoffs eingearbeitet werden.

Unmittelbarer Erfindungsgegenstand ist ein Verfahren zur Herstellung von Polybutadien enthaltenden und mit bevorzugt 0.005 bis 0.5 Gew.-% α-Tocopherol sowie 0.005 bis 0.5 Gew.-% eines Thiodipropionsäureesters stabilisierten Pfropfkautschuken, wobei erfindungsgemäß ein entsprechender Polybutadien-g-SAN-Pfropfkautschuklatex mit einer entsprechenden Menge einer Emulsion oder Dispersion von α-Tocopherol und eines Thiodipropionsäureesters versetzt und die Mischung gegebenenfalls entwässert und der Kautschuk gewonnen wird, sowie die auf diese Weise hergestellten Mischungen, sei es in Form ihrer Emulsion/Dispersion, sei es in entwässerter und/oder verarbeiteter Form, sei es in Form der mit dem Pfropfkautschuk schlagzäh modifizierten thermoplastischen Formmasse mit verbesserter Wärmealterungsbeständigkeit.

Die Erfindung ist mit besonderem Vorteil anwendbar zur Verbesserung der Wärmealterungsbeständigkeit von SAN- bzw. ABS-Formmassen. Solche Formmassen sind allgemein bekannt; zu ihrer Herstellung und Ausrüstung gegen Wärmealterung wird auf Gächter/Müller: Kunststoffadditive, 3. Aufl., Carl Hanser Verlag, München 1990 verwiesen.

Auch den europäischen Patentveröffentlichungen 62901 und 258741 und der deutschen Auslegeschrift 2427960 sind Hinweise zu entnehmen.

Als Stabilisator wird erfindungsgemäß eine Mischung von α-Tocopherol bzw. Vitamin E und einem Thiodipropionsäureester verwendet; als Thiodipropionsäureester sind besonders Ester höherer gesättigter oder olefinisch ungesättigter Fettsäuren geeignet, von denen Stearinsäure- und Laurinsäureester bevorzugt sind.

Thiodipropionsäureester und α-Tocopherol werden zweckmäßig im Gewichtsverhältnis von 0.5 : 1 bis 10 : 1 verwendet; bevorzugt ist ein Mengenverhältnis von 1:1 bis 8:1, insbesondere 1,5:1 bis 5:1.

Die Vorteile des erfindungsgemäßen Stabilisierungsverfahrens liegen auf der Hand und lassen sich experimentell leicht zeigen: Eine durch Ausfällen und Trocknen entwässerte erfindungsgemäße Mischung wird unter definierten Bedingungen (z.B. isotherm bei 180°C) an der Luft erhitzt, bis eine exotherme Reaktion auftritt und die bis dahin verstrichene Zeit gemessen.

### Beispiele

### Herstellung von Pfropfkautschukdispersionen

Es wurden zwei Polybutadien-g-SAN-Pfropfkautschuklatices hergestellt, die jeweils eine bimodale Teilchengrößenverteilung aufwiesen; der eine wurde nach dem in der DE-A-24 27 960 und der andere nach dem in der EP-A-258 741 beschriebenen Verfahren erhalten.

Eine Stabilisatoremulsion wurde speziell dadurch erhalten, daß 20 g eines Gemisches von 33 Gew.-% α-Tocopherol und 66 Gew.-% Dilaurylthiodipropionat (erhältlich unter der Handelsbezeichnung Irganox PS 800) bei 60 - 80°C zusammen mit 2 g Stearinsäure aufgeschmolzen und mit 40 g wäßriger, 0.1 %iger Kalilauge intensiv verrührt wurden. Diese Emulsion ist über mehrere Tage stabil.

Eine andere Stabilisatoremulsion wurde dadurch erhalten, daß einer Stabilisatorschmelze aus 1 Gew.-Teil α-Tocopherol und 2 Gew.-Teilen Dilaurylthiodipropinat mit einer wäßrigen Emulgatorlösung aus 6,9 g Kaliumstearat und 120,6 g Wasser intensiv verrührt wurde. Diese Emulsion ist über längere Zeiträume stabil. Anstelle von K-Stearat ist auch Na-alkylsulfonat oder Sulfobernsteinsäureester geeignet.

Entsprechende Mengen der Stabilisatoremulsion und der Kautschuklatices wurden vermischt, mittels Magnesiumsulfatlösung gefällt, d.h. koaguliert und entwässert und in üblicher Weise der Kautschuk gewonnen. Die jeweils benötigte Menge des Kautschuks wurde bei 250°C auf einer Zweiwellen-Schneckenknetmaschine (ZSK 30 von Werner & Pfleiderer) in eine handelsübliche SAN-Formmasse eingearbeitet.

Aus der stabilisierten, schlagzäh modifizierten Formmasse wurden bei 250°C Normkleinstäbe als Probekörper gespritzt. Nach Lagerung von unterschiedlicher Dauer bei 110°C wurden Verfärbungsgrad (visuell) und der Abfall der mechanischen Widerstandsfähigkeit gegen Schlagbeanspruchung bestimmt. Der Grenzwert der Lagerdauer beim Bruch der (ungekerbten) Probekörper ist angegeben.

Zum Vergleich wurden unstabilisierte (Vergleich V1) und mit jeweils nur einem Bestandteil (Vergleich V2 und V3) stabilisierte Mischungen hergestellt und untersucht. Die Ergebnisse sind in der nachstehenden Tabelle wiedergegeben.

**Tabelle**

| Verfärbungs- und Wärmealterungsbeständigkeit von stabilisierten ABS-Formmassen | | | | | |
|---|---|---|---|---|---|
| Beispiel | DLTDP* | ATP* | LD₁₈₀* | LD₁₁₀* | Farbe |
| | [Gew%] | [Gew%] | [min] | [h] | [*] |
| V1 | -- | -- | 10 | 60 | hellbraun |
| 1 | 0.2 | 0.1 | 204 | 100 | ++ |
| 2 | 0.4 | 0.2 | 184 | 90 | +/- |
| 3 | 0.14 | 0.07 | 210 | 80 | + |
| V2 | 0.2 | -- | 19 | ** | ** |
| V3 | -- | 0.2 | 104 | ** | ** |

| | | | | | |
|---|---|---|---|---|---|
| *In der vorstehenden Tabelle bedeuten die Abkürzungen: | | | | | |
| ** nicht untersucht wegen ungünstiger Vorergebnisse V zum Vergleich | | | | | |

- DLTPP:: Dilaurylthiodipropionat
- ATP:: α-Tocopherol
- LD₁₈₀:: Wärmelagerung des Kautschuks allein bei 180°C bis zur Zersetzung [Minuten]
- LD₁₁₀:: Wärmelagerung der ABS-Formmasse bei 110°C bis zum Belastungsbruch [Stunden)
- Farbe nach Test LD₁₁₀:: +, ++, - = heller,sehr viel heller, dunkler als Bezugswert

## Patentansprüche

1. Polybutadien enthaltender Pfropfkautschuk, wie er erhalten wird, wenn man einen Polybutadien-g-SAN-Pfropfkautschuklatex mit bimodaler Teilchengrößenverteilung und eine emulgierte Mischung von α-Tocopherol und einem Thiodipropionsäureester in einer solchen Menge mischt, daß der Kautschuk 0.005 bis 0.5 Gew.-% α-Tocopherol sowie 0.005 bis 0.5 Gew.-% des Thiodipropionsäureesters enthält und die Mischung durch Ausfällen und Trocknen entwässert.

2. Verfahren zur Herstellung von Pfropfkautschuken nach Anspruch 1, dadurch gekennzeichnet, daß man die Bestandteile in Form einer Emulsion oder Dispersion miteinander mischt und die Mischung durch Ausfällen und Trocknen entwässert.

3. Verwendung eines Pfropfkautschuks nach Anspruch 1 zur Herstellung schlagzäh modifizierter thermoplastischer Formmassen mit verbesserter Wärmealterungsbeständigkeit.

4. Schlagzäh modifizierte thermoplastische Formmasse mit verbesserter Wärmealterungsbeständigkeit auf der Grundlage einer Mischung eines harten thermoplastischen Werkstoffs und eines Pfropfkautschuks, enthaltend einen Pfropfkautschuk nach Anspruch 1.

## Claims

1. A polybutadiene-containing graft rubber as obtained if a polybutadiene-g-SAN graft rubber latex having bimodal particle size distribution and an emulsified mixture of α-tocopherol and a thiodipropionic ester are mixed in an amount such that the rubber contains from 0.005 to 0.5% by weight of α-tocopherol and from 0.005 to 0.5% by weight of the thiodipropionic ester and the mixture is dewatered by precipitation and drying.

2. A process for the preparation of graft rubbers as claimed in claim 1, wherein the components are mixed with one another in the form of an emulsion or dispersion and the mixture is dewatered by precipitation and drying.

3. The use of a graft rubber as claimed in claim 1 for the production of toughened thermoplastic molding materials having improved high-temeprature aging resistance.

4. A toughened thermoplastic molding material having improved high-temperature aging resistance, based on a mixture of a hard thermoplastic material and a graft rubber, said molding material containing a graft rubber as claimed in claim 1.

## Revendications

1. Caoutchouc greffé contenant du polybutadiène, tel qu'obtenu lorsque l'on mélange un polybutadiène-g-SAN-(latex de caoutchouc greffé) ayant une distribution de particules bimodale et un mélange émulsionné d'α-tocophérol et d'un ester d'acide thiodipropionique, dans des quantités telles que le caoutchouc contient 0,005-0,5% en poids d'α-tocophérol ainsi que 0,005-0,5% en poids de l'ester d'acide thiodipropionique, puis on élimine l'eau du mélange par précipitation et séchage.

2. Procédé de préparation de caoutchoucs greffés selon la revendication 1, caractérisé en ce que l'on mélange ensemble les composants sous forme d'une émulsion ou d'une dispersion et on élimine l'eau du mélange par précipitation et séchage.

3. Utilisation d'un caoutchouc greffé selon la revendication 1, pour la préparation de masses à mouler thermoplastiques à résilience modifiée présentant une résistance améliorée au vieillissement par la chaleur.

4. Masses à mouler thermoplastiques à résilience modifiée et présentant une résistance améliorée au vieillissement par la chaleur, à base d'un mélange d'une matière thermoplastique dure et d'un caoutchouc greffé, contenant un caoutchouc greffé selon la revendication 1.
